# EUROPÄISCHE PATENTANMELDUNG

(11) **EP 1 336 943 A1**
(43) Veröffentlichungstag der Anmeldung: **20.08.2003**
(21) Anmeldenummer: 02003500.2
(22) Anmeldetag: 15.02.2002
(51) Int. Cl.: G08B 5/38, H05B 37/02, H05B 33/08

(54) **Warnlichtvorrichtung für ein Fahrzeug, insbesondere für ein Flugzeug**

(71) Anmelder: Goodrich Hella Aerospace Lighting Systems GmbH, 59557 Lippstadt (DE)
(72) Erfinder: Gronemeier, Frank, 59199 Bönen (DE); Müller, Bernhard, 59823 Oeventrop (DE); Schmees, Siegfried, 59590 Gesecke (DE)
(74) Vertreter: Hilleringmann, Jochen, Dipl.-Ing.

(57) **Zusammenfassung**

Die Warnlichtvorrichtung (10) für ein Fahrzeug, insbesondere für ein Flugzeug, ist mit einer zentralen Energieversorgungseinheit (12), einem Energieversorgungsbus (14) versehen, der mit der Energieversorgungseinheit (12) verbunden ist. Ferner weist die Warnlichtvorrichtung (10) mehrere Warnleuchteneinheiten (16) auf, die parallel zueinander an dem Energieversorgungsbus (14) angeschlossen sind. Die Energieversorgungseinheit (12) weist einen Enkoder (18) zum Kodieren von Nachrichten und zum Ausgeben der kodierten Nachrichten (42) über den Energieversorgungsbus (14) an die Warnleuchteneinheiten (16) auf. Jede Warnleuchteneinheit (16) weist ein oder mehrere Licht aussendende erste Leuchtdioden (32), eine von der zentralen Energieversorgungseinheit (12) über den Energieversorgungsbus (14) gespeiste erste Energieversorgungsschaltung (28) zur Energieversorgung der mindestens einen ersten Leuchtdiode (32) entsprechend deren spezifischer Betriebsparameter und einen Dekoder (48) zum Dekodieren von über den Energieversorgungsbus (14) gelieferte kodierte Nachrichten (42) auf. Jede kodierte Nachricht (42) weist einen Synchronisationsteil (44) sowie einen sich daran anschließenden Leuchtdiodenansteuermusterteil (46) auf und ist durch die Dekoder (48) der Warnleuchteneinheiten (16) dekodierbar. Der Synchronisationsteil (44) der kodierten Nachricht (42) synchronisiert das Aufleuchten der ersten Leuchtdioden (32) der Warnleuchteneinheiten (16) entsprechend dem Leuchtdiodenansteuermusterteil (46) und ist verschieden von einer versehentlichen Energieversorgungsunterbrechung auf dem Energieversorgungsbus. Die Dekoder (48) der Warnleuchteneinheiten (16) steuern die ersten Energieversorgungsschaltungen (28) der Warnleuchteneinheiten (16) zum dem Leuchtdiodenansteuermusterteil (46) der kodierten Nachricht (42) entsprechenden intermittierenden Versorgen der Leuchtdioden (32) mit Energie an.

## Beschreibung

Die Erfindung betrifft Warnlichtvorrichtungen für Fahrzeuge und insbesondere für Flugzeuge, die gepulstes oder Dauerlicht aussenden und insbesondere der Verhinderung einer Kollision des Fahrzeuges mit einem anderen Fahrzeug dienen. Derartige Warnlichtvorrichtungen sind bei sich auf dem Land, im Wasser und in der Luft bewegenden Fahrzeugen gleichermaßen einsetzbar.

Warnlichtvorrichtungen werden insbesondere im Bereich der zivilen und militärischen Luftfahrt eingesetzt. Diese Warnlichtvorrichtungen sind als Blitzlichtsysteme ausgebildet, wobei das Blitzlicht beispielsweise durch eine Gasentladung erzeugt wird. Hier werden insbesondere Xenon-Blitzlampen eingesetzt.

Gegenwärtig werden Anstrengungen unternommen, die herkömmlichen Blitzlampen der Warnlichtvorrichtungen durch Leuchtdioden bzw. Leuchtdiodenmodule zu ersetzen. Der Vorteil der Leuchtdioden gegenüber beispielsweise Xenon-Blitzlampen ist insbesondere in der geringeren elektrischen Belastung der für die Ansteuerung erforderlichen Bauteile, in verbesserten EMV-Eigenschaften und dem geringeren Bauraum zu sehen. Leuchtdioden und insbesondere die bei einer Warnlichtvorrichtung für ein Fahrzeug zum Einsatz kommenden Hochleistungsleuchtdioden weisen mitunter unterschiedliche Spezifikationen auf, die unter anderem auf Exemplarstreuungen zurückzuführen sind. Daher ist es zweckmäßig, beim Einsatz von Leuchtdioden die Warnlichtvorrichtung, deren Leuchtdioden an unterschiedlichen Stellen des Fahrzeuges angeordnet sind, individuell mit speziell auf die Betriebsparameter der Leuchtdioden abgestimmter elektrischer Energie (Spannung und Strom) zu versorgen. Für den Betrieb von Leuchtdioden ist vor allem ein konstanter Versorgungsstrom erforderlich.

Werden also an einem Fahrzeug für dessen Warnlichtvorrichtung Warnleuchteneinheiten mit Leuchtdioden vorgesehen, so ist neben einem Energieversorgungssystem bestehend aus einer zentralen Energieversorgungseinheit und einem Energieversorgungsbus, an dem die einzelnen Warnleuchteneinheiten angeschlossen sind, auch eine zu jeder Warnleuchteneinheit führende Ansteuersignalleitung erforderlich, um die Energieversorgung der Leuchtdioden der einzelnen Warnleuchteneinheiten individuell einzustellen und synchron zu gestalten. Über diese Leitung lässt sich dann auch von einer zentralen Steuereinheit aus das Muster vorgeben, in dem die Leuchtdioden aufleuchten. Insbesondere bei militärischen Flugzeugen oder sonstigen Fahrzeugen kann es erforderlich sein, durch das Lichtmuster unterschiedliche Einsatzsituationen optisch anzuzeigen.

Das Vorsehen ein oder mehrerer zusätzlicher Signalleitungen erfordert einen erhöhten Verdrahtungsaufwand, was nicht so sehr beim Bau eines Fahrzeuges sondern vielmehr beim Austausch der Warnleuchteneinheiten mit konventionellen Blitzlampen durch solche mit Leuchtdioden ins Gewicht fällt.

Der Erfindung liegt die Aufgabe zu Grunde, eine Warnlichtvorrichtung für ein Fahrzeug, insbesondere für ein Flugzeug, zu schaffen, die mit Leuchtdioden versehen ist, ohne dass zu deren Ansteuerung mehr als die für die Energieversorgung erforderlichen Leitungen benötigt werden.

Zur Lösung dieser Aufgabe wird mit der Erfindung eine Warnlichtvorrichtung für ein Fahrzeug, insbesondere für ein Flugzeug, vorgeschlagen, die versehen ist mit
- einer zentralen Energieversorgungseinheit,
- einem Energieversorgungsbus, der mit der Energieversorgungseinheit verbunden ist, und
- mehreren Warnleuchteneinheiten, die parallel zueinander an dem Energieversorgungsbus angeschlossen sind.

Diese Warnlichtvorrichtung ist erfindungsgemäß dadurch gekennzeichnet,
- dass die Energieversorgungseinheit einen Enkoder zum Kodieren von Nachrichten und zum Ausgeben der kodierten Nachrichten über den Energieversorgungsbus an die Warnleuchteneinheiten aufweist,
- dass jede Warnleuchteneinheit ein oder mehrere Licht aussendende erste Leuchtdioden, eine von der zentralen Energieversorgungseinheit über den Energieversorgungsbus gespeiste erste Energieversorgungsschaltung zur Energieversorgung der mindestens einen ersten Leuchtdiode entsprechend deren spezifischer Betriebsparameter und einen Dekoder zum Dekodieren von über den Energieversorgungsbus gelieferte kodierte Nachrichten aufweist, und
- dass jede kodierte Nachricht einen Synchronisationsteil sowie einen sich daran anschließenden Leuchtdiodenansteuermusterteil aufweist und durch die Dekoder der Warnleuchteneinheiten dekodierbar ist,
- wobei der Synchronisationsteil der kodierten Nachricht das Aufleuchten der ersten Leuchtdioden der Warnleuchteneinheiten entsprechend dem Leuchtdiodenansteuermusterteil synchronisiert sowie verschieden ist von dem Strom- und Spannungsverlauf auf dem Energieversorgungsbus im Falle einer versehentlichen Energieversorgungsunterbrechung auf dem Energieversorgungsbus und
- wobei die Dekoder der Warnleuchteneinheiten die ersten Energieversorgungsschaltungen der Warnleuchteneinheiten zum dem Leuchtdiodenansteuermusterteil der kodierten Nachricht entsprechenden intermittierenden Versorgen der Leuchtdioden mit Energie ansteuern.

Erfindungsgemäß ist jede Warnleuchteneinheit der Warnlichtvorrichtung mit ein oder mehreren ersten Leuchtdioden versehen. Diese Leuchtdioden sind insbesondere in Array-Form angeordnet, wobei jedes dieser Module aus mehreren parallel zueinander geschalteten Gruppen von innerhalb der Gruppen in Reihe geschalteten Leuchtdioden besteht.

Diese ersten Leuchtdioden senden elektromagnetische Strahlung im sichtbaren Bereich, also Licht, aus. Zur Versorgung dieser Leuchtdioden weist jede Warnleuchteneinheit eine erste Energieversorgungsschaltung auf, die die Leuchtdiode/Leuchtdioden dieser Warnleuchteneinheit mit einer entsprechend den spezifischen Betriebsparametern der Leuchtdiode/n angepassten Energie versorgt. Zur Energieversorgung wird dabei vorzugsweise ein Spannungswandler eingesetzt, an dessen Eingang die über den Energieversorgungsbus gelieferte und von der Energieversorgungseinheit erzeugte Betriebsspannung anliegt und an dessen Ausgang eine der Anzahl der in Reihe geschalteten Leuchtdioden entsprechende Ausgangsspannung und ein konstanter Betriebsstrom ausgegeben wird. Die Versorgung der Leuchtdioden mit Energie erfolgt intermittierend, so dass die Leuchtdioden der Warnleuchteinheiten in einem Blitzlichtmuster aufleuchten.

Die Synchronisation und Versorgung der Warnleuchteneinheiten mit der für das Blitzlichtmuster erforderlichen Information erfolgt bei der erfindungsgemäßen Warnlichtvorrichtung durch Aussenden kodierter Nachrichten über den Energieversorgungsbus. Zu diesem Zweck weist die Energieversorgungseinheit einen Enkoder zum Kodieren von Nachrichten und zum Ausgeben dieser kodierten Nachrichten über den Energieversorgungsbus an die Warnleuchteneinheiten auf. Jede Warnleuchteneinheit ist mit einem Dekoder zum Dekodieren empfangener kodierter Nachrichten versehen. Jede kodierte Nachricht weist einen Synchronisationsteil und einen sich daran anschließenden Leuchtdiodenansteuermusterteil auf. Der Enkoder erzeugt die kodierten Nachrichten vorzugsweise durch Spannungsmodulation. Aber auch eine Strommodulation ist grundsätzlich möglich. In jedem Fall muss bei Modulation der Spannung und/oder des Stroms der Synchronisationsteil der kodierten Nachricht verschieden sein von dem Zustand, in dem sich der Energieversorgungsbus bei einem kurzzeitigen Energieausfall befindet. Dadurch ist sichergestellt, dass ein derartiger kurzzeitiger Energieausfall im Energieversorgungssystem (zentrale Energieversorgungseinheit und Energieversorgungsbus) fälschlicherweise von den Warnleuchteneinheiten als Synchronisationssignal verstanden wird.

Wenn die Dekoder der Warnleuchteneinheiten den Synchronisationsteil der kodierten Nachrichten als Synchronisationssignal und damit als Auslöser für ein nun zu beginnendes Blitzlichtmuster erkannt haben, erhalten sie durch den zweiten Teil der kodierten Nachricht, nämlich dem Leuchtdiodenansteuermusterteil Informationen darüber, welches Blitzlichtmuster gefahren werden soll. In jeder Warnleuchteneinheit wird dann die erste Energieversorgungsschaltung zum dem Leuchtdiodenansteuermusterteil der kodierten Nachricht entsprechenden intermittierenden Versorgen der Leuchtdioden mit Energie angesteuert.

Für den Betrieb der Warnlichtvorrichtung sind grundsätzlich zwei Varianten möglich. So könnte beispielsweise jede Warnleuchteneinheit nach Empfang einer kodierten Nachricht bis zum Empfang der nächsten kodierten Nachricht das Blitzlichtmuster autark wiederholt erzeugen und fahren. Eine Alternative zu diesem Konzept besteht darin, zu Beginn einer jeden Periode eines Blitzlichtmusters eine kodierte Nachricht über das Energieversorgungssystem an die Warnleuchteneinheiten auszusenden. Die zuerst genannte Variante bzw. eine Abwandlung dieser, dass nämlich kodierte Nachrichten nur von Zeit zu Zeit und insbesondere nicht als Auslöser für den Beginn eines Blitzlichtmusters ausgesendet werden, ist insoweit von Vorteil, als das Versenden von Nachrichten über den Energieversorgungsbus auf ein Minimum reduziert wird, was insbesondere im Hinblick auf EMV von Vorteil ist.

Mit der erfindungsgemäßen Warnlichtvorrichtung ist also ein LED-Blitzlichtsystem für Fahrzeuge geschaffen, bei dem die Kommunikation zwischen der zentralen Energieversorgungseinheit und den einzelnen Warnleuchteneinheiten ohne zusätzliche Steuerleitung sondern vielmehr über die Energieversorgungsleitungen erfolgt. Dabei lassen sich die Warnleuchteneinheiten in unterschiedlichen Blitzlichtmodi ansteuern. Insbesondere können die Leuchtdioden ihren speziellen Parametern entsprechend mit Betriebsenergie versorgt werden. Dadurch, dass keine zusätzlichen Kommunikationsleitungen benötigt werden, ist der Verdrahtungsaufwand der erfindungsgemäßen Warnlichtvorrichtung so gering wie möglich. Insbesondere eignet sich die erfindungsgemäße Warnlichtvorrichtung dann, wenn die konventionelle Warnlichtvorrichtung des Fahrzeuges gegen ein LED-Blitzlichtsystem ausgetauscht werden soll.

In vorteilhafter Weiterbildung der Erfindung ist ferner vorgesehen, dass jede Warnleuchteneinheit mindestens eine zweite Leuchtdiode aufweist, die nicht sichtbare elektromagnetische Strahlung aussendet. Bei dieser zweiten Leuchtdiode handelt es sich beispielsweise um eine IR-Leuchtdiode. Derartige Leuchtdioden werden beispielsweise bei Warnlichtvorrichtungen für militärische Fahrzeuge und insbesondere Flugzeuge verwendet.

Die Entscheidung, welche Leuchtdiode (erste oder zweite) angesteuert wird, kann auch über die kodierte Nachricht getroffen werden. Eine Alternative dazu besteht darin, durch unterschiedlich hohe auf dem Energieversorgungsbus anstehende Energieversorgungspegel zu entscheiden, ob die ersten oder die zweiten Leuchtdioden der Warnleuchteneinheiten anzusteuern sind. In diesem Fall weist der Dekoder jeder Warnleuchteneinheit eine Modusauswahlschaltung auf, die über die Spannung auf dem Energieversorgungsbus gesteuert ist.

Sofern eine zweite Art von Leuchtdioden pro Warnleuchteneinheit eingesetzt wird, ist es zweckmäßig, für jede Leuchtdiodenart eine separate Energieversorgungsschaltung vorzusehen, da die Betriebsparameter und Ansteuerungen der beiden Leuchtdioden-Typen im Regelfall unterschiedlich sind. Über die Modusauswahlschaltung wird dann entschieden, welche der beiden Energieversorgungsschaltungen pro Warnleuchteneinheit zum Betrieb der Leuchtdioden angesteuert wird.

Die Erfindung nachfolgend anhand der Zeichnung näher erläutert. Im einzelnen zeigen:
- Fig. 1: ein Blockschaltbild zur Verdeutlichung der Verschaltung der einzelnen verteilt angeordneten Komponenten eines Ausführungsbeispiels einer Warnlichtvorrichtung für ein Fahrzeug,
- Fig. 2: ein Blockschaltbild einer Warnleuchteneinheit der Warnlichtvorrichtung gemäß Fig. 1 und
- Fig. 3: ein Beispiel für den Aufbau einer kodierten Nachricht bestehend aus Synchronisationsteil und Leuchtdiodenansteuermusterteil sowie für die Ausgestaltung der Leuchtdiodenansteuermusterteile zum Ansteuern der Warnleuchteneinheiten in unterschiedlichen Blitzlichtmustern.

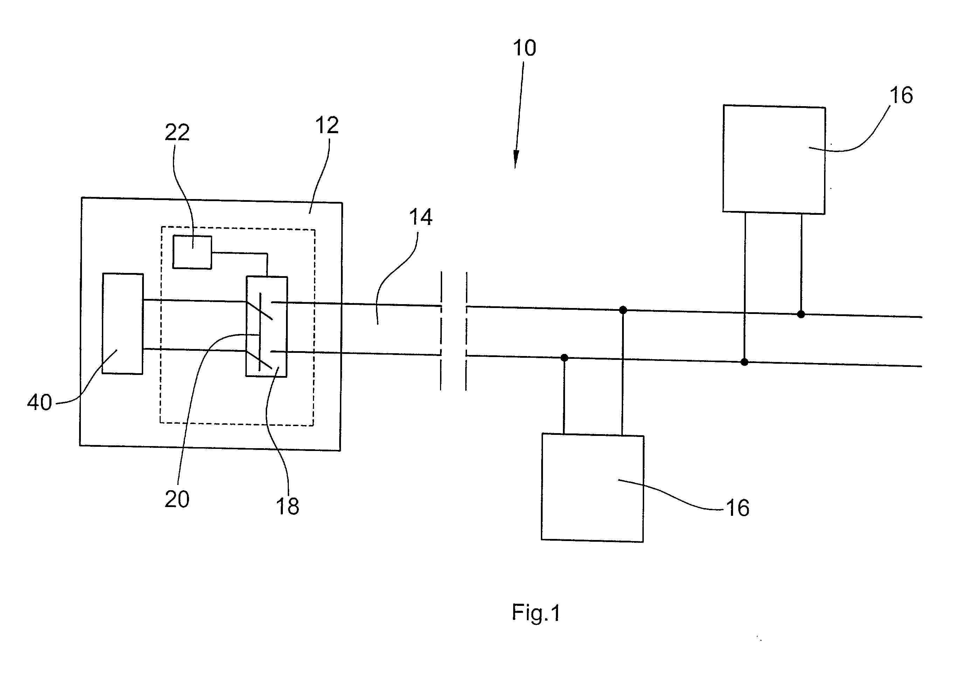

Gemäß Fig. 1 weist eine Warnlichtvorrichtung 10 für beispielsweise ein Flugzeug ein zentrales Energieversorgungssystem auf, das eine zentrale Energieversorgungseinheit 12 mit einem Energieversorgungsbus 14 umfasst. An den Energieversorgungsbus 14 sind mehrere Warnleuchteneinheiten 16 angeschlossen.

Die Bordnetz-Gleichspannung bei einem Flugzeug beträgt beispielsweise 28 V. Diese Bordnetzspannung wird von der Energieversorgungseinheit 12 erzeugt und liegt auf dem Energieversorgungsbus 14 auf. Am Eingang einer jeden Warnleuchteneinheit 16 liegen also im Normalfall 28 V Gleichspannung an. Die zentrale Energieversorgungseinheit 12 ist mit einem Enkoder 18 versehen, der z.B. einen Schalter 20 zum kurzzeitigen impulsartigen Unterbrechen der Versorgungsspannung auf dem Energieversorgungsbus 14 und eine den Schalter 20 steuernde Ansteuerschaltung 22 aufweist.

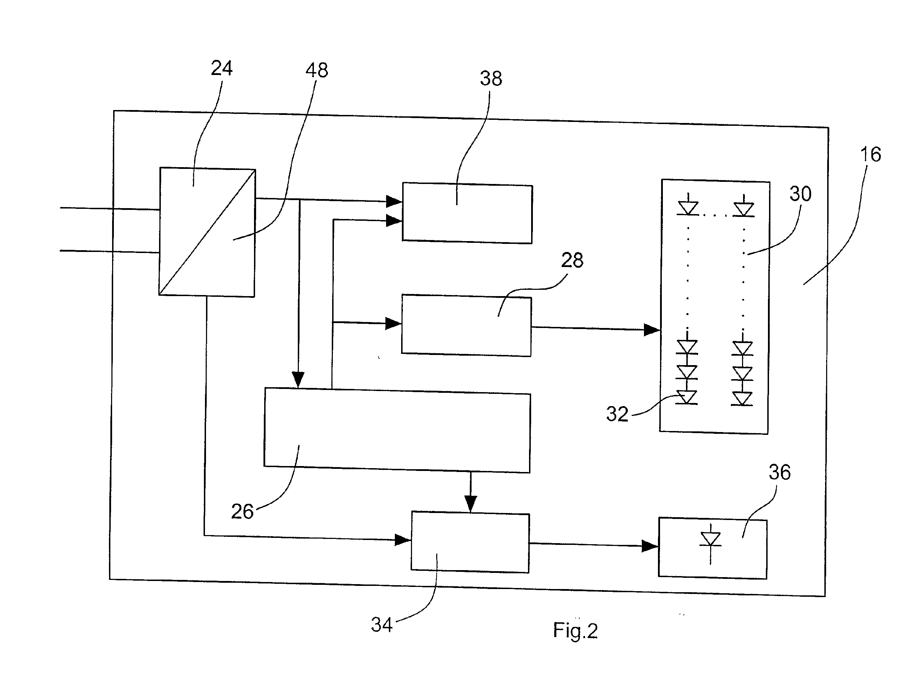

Ein Blockschaltbild, das die einzelnen Komponenten einer jeden Warnleuchteneinheit 16 zeigt, ist in Fig. 2 dargestellt. Am Eingang jeder Warnleuchteneinheit 16 befindet sich eine Modusauswahlschaltung 24, die spannungsgesteuert ist und in Abhängigkeit von der Größe der Versorgungsspannung des Energieversorgungsbus 14 über eine zentrale Steuereinheit 26 eine erste Energieversorgungsschaltung 28 zum Ansteuern eines Moduls 30 mit einer Vielzahl von sichtbares Licht abstrahlenden Leuchtdioden 32 oder eine zweite Energieversorgungsschaltung 34 zum Ansteuern einer oder mehrerer Infrarot-Leuchtdioden 36 mit elektrischer Energie versorgt. Ein ebenfalls über die Modusauswahlschaltung 24 mit elektrischer Energie versorgter Energiespeicher 38 versorgt zusätzlich die erste Energieversorgungsschaltung 28 mit elektrischer Energie, um Spannungsspitzen beim Einschalten der ersten Energieversorgungsschaltung 28 zu verhindern.

Die Ansteuerung der Leuchtdioden 32 des Moduls 30 erfolgt impulsartig und wahlweise in einem von mehreren unterschiedlichen Ansteuerungsmustern. Die erste Energieversorgungsschaltung 28 kann zur impulsartigen Ansteuerung des Moduls 30 mit der Energie aus dem Energiespeicher 38 arbeiten. Im Gegensatz zum Impulsbetrieb des Moduls 30 arbeitet jede der Infrarot-Leuchtdioden 36 z.B. im Dauerbetrieb.

Wie bereits oben erwähnt, ist die Information darüber, ob die Leuchtdioden 32 oder die Infrarot-Leuchtdiode 36 gerade betrieben wird, als über den Energieversorgungsbus 14 transportiertes Signal kodiert. In diesem Fall entscheidet die Größe der Spannung darüber, welche Leuchtdiode bzw. Leuchtdioden gerade betrieben werden. Die Größe der Versorgungsspannung wird durch eine Einheit 40 in der zentralen Energieversorgungseinheit 12 eingestellt.

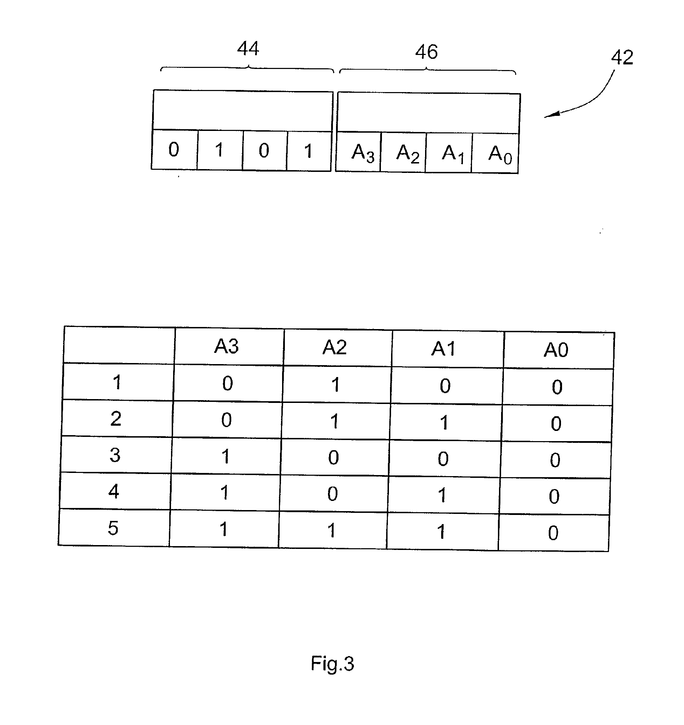

Darüber hinaus wird aber auch die Information darüber, in welchem Blitzlichtmuster die Leuchtdioden 32 des Moduls 30 aufleuchten, über den Energieversorgungsbus 14 an alle Warnleuchteneinheiten 16 versendet. Hierzu wird durch entsprechendes Aus- und Einschalten des Schalters 20, also durch entsprechendes kurzzeitiges Unterbrechen der Energieversorgung ein Bitstring erzeugt und versendet, der eine kodierte Nachricht 42 darstellt und einen Synchronisationsteil 44 sowie einen Leuchtdiodenansteuermusterteil 46 gemäß Fig. 3 aufweist. In diesem Ausführungsbeispiel besteht der Synchronisationsteil 44 jeder kodierten Nachricht 42 aus der Bitfolge 0101, an die sich eine vierstellige Bitfolge aus den Bits A₃ bis A₀ zur Kodierung eines Leuchtdiodenansteuermusters anschließt. Mit diesem vierstelligen Kode lassen sich beispielsweise die fünf aus der Tabelle der Fig. 3 ersichtlichen unterschiedlichen Kodierungen erstellen, die unterschiedlichen Blitzlichtmustern 1 bis 5 entsprechen (maximal 16 Muster sind möglich).

Jede kodierte Nachricht 42 wird synchron an alle Warnleuchteneinheiten 16 versendet. Den Modusauswahlschaltungen 24 nachgeschaltete Dekoder 48 der Warnleuchteneinheiten 16 identifizieren den Synchronisationsteil 44 jeder Nachricht 42, der für jede kodierte Nachricht 42 gleich ist, als Start für die Initiierung eines Blitzlichtmusters. Hierbei unterscheidet sich der Synchronisationsteil in seiner speziellen Folge von Ein- und Ausschaltungen der Energieversorgung von einer kurzzeitig und fehlerhaft auftretenden Energieversorgungsunterbrechung. Derartige kurzzeitige Unterbrechungen können also ein Blitzlichtmuster damit nicht auslösen.

Mit der Erfindung ist es also möglich, die Leuchtdioden 32 der Warnleuchteneinheiten 16 synchron entsprechend einem von mehreren möglichen Blitzlichtmustern anzusteuern, obwohl lediglich der Energieversorgungsbus und insbesondere kein Datenbus zur Verfügung steht. Die Ansteuerung der Module 30 der einzelnen Warnleuchteneinheiten 16 erfolgt dezentral in den jeweiligen Warnleuchteneinheiten, wodurch auf die auf Grund von Exemplarstreuungen bedingten Besonderheiten und Parametergegebenheiten der Module 30 der Warnleuchteneinheiten 16 durch entsprechende Ansteuerung in den ersten Energieversorgungsschaltungen 28 Rechnung getragen wird. Die Anpassung der den Leuchtdioden 32 zuzuführenden maximal erlaubten bzw. gewünschten Energie erfolgt durch die Energieversorgungsschaltungen 28 dergestalt, dass sichergestellt ist, dass bei einem Blitzlichtmuster in Form beispielsweise eines Fünffachblitzes nicht mehr Energie in den Leuchtdioden 32 umgesetzt wird als bei einem Blitzlichtmuster in Form eines Doppelblitzes. Dies wird dadurch sichergestellt, dass der die Leuchtdioden 32 durchfließende Strom in Abhängigkeit von der Gesamteinschaltdauer pro Blitzlichtmuster eingestellt wird. Je öfter die Leuchtdioden 32 pro Blitzlichtmuster aufleuchten, um so geringer ist der sie durchfließende Strom. Auch bei einem Austausch des Leuchtmittels erfolgt die "Anpassung" auf dieses ausgetauschte Leuchtmittel dezentral in der betreffenden Warnleuchteneinheit 16.

## Patentansprüche

1. Warnlichtvorrichtung für ein Fahrzeug, insbesondere für ein Flugzeug, mit
- einer zentralen Energieversorgungseinheit (12),
- einem Energieversorgungsbus (14), der mit der Energieversorgungseinheit (12) verbunden ist, und
- mehreren Warnleuchteneinheiten (16), die parallel zueinander an dem Energieversorgungsbus (14) angeschlossen sind,
**dadurch gekennzeichnet ,**
- **dass** die Energieversorgungseinheit (12) einen Enkoder (18) zum Kodieren von Nachrichten und zum Ausgeben der kodierten Nachrichten (42) über den Energieversorgungsbus (14) an die Warnleuchteneinheiten (16) aufweist,
- **dass** jede Warnleuchteneinheit (16) ein oder mehrere Licht aussendende erste Leuchtdioden (32), eine von der zentralen Energieversorgungseinheit (12) über den Energieversorgungsbus (14) gespeiste erste Energieversorgungsschaltung (28) zur Energieversorgung der mindestens einen ersten Leuchtdiode (32) entsprechend deren spezifischer Betriebsparameter und einen Dekoder (48) zum Dekodieren von über den Energieversorgungsbus (14) gelieferte kodierte Nachrichten (42) aufweist, und
- **dass** jede kodierte Nachricht (42) einen Synchronisationsteil (44) sowie einen sich daran anschließenden Leuchtdiodenansteuermusterteil (46) aufweist und durch die Dekoder (48) der Warnleuchteneinheiten (16) dekodierbar ist,
- wobei der Synchronisationsteil (44) der kodierten Nachricht (42) das Aufleuchten der ersten Leuchtdioden (32) der Warnleuchteneinheiten (16) entsprechend dem Leuchtdiodenansteuermusterteil (46) synchronisiert sowie verschieden ist von dem Strom- und Spannungsverlauf auf dem Energieversorgungsbus im Falle einer versehentlichen Energieversorgungsunterbrechung auf dem Energieversorgungsbus und
- wobei die Dekoder (48) der Warnleuchteneinheiten (16) die ersten Energieversorgungsschaltungen (28) der Warnleuchteneinheiten (16) zum dem Leuchtdiodenansteuermusterteil (46) der kodierten Nachricht (42) entsprechenden intermittierenden Versorgen der Leuchtdioden (32) mit Energie ansteuern.

2. Warnlichtvorrichtung nach Anspruch 1, **dadurch gekennzeichnet, dass** der Enkoder (18) der zentralen Energieversorgungseinheit (12) die Nachrichten (42) digital kodiert.

3. Warnlichtvorrichtung nach Anspruch 1 oder 2, **dadurch gekennzeichnet, dass** der Enkoder (18) der zentralen Energieversorgungseinheit (12) zum Kodieren der Nachrichten (42) die elektrische Spannung auf dem Energieversorgungsbus (14) intermittierend auf einen von mindestens zwei vorgebbaren Werten einstellt, und zwar insbesondere auf den Wert 0 V und den zum Betrieb der ersten Energieversorgungsschaltungen (28) der Warnleuchteneinheiten (16) erforderlichen Betriebsspannungswert.

4. Warnlichtvorrichtung nach einem der Ansprüche 1 bis 3, **dadurch gekennzeichnet, dass** jede Warnleuchteneinheit (16) ein oder mehrere Leuchtdiodenmodule (30) aufweist, von denen jedes ein Array von ersten Leuchtdioden (32) umfasst.

5. Warnlichtvorrichtung nach einem der Ansprüche 1 bis 4, **dadurch gekennzeichnet, dass** jede Warnleuchteneinheit (16) ein oder mehrere nicht sichtbare elektromagnetische Strahlung aussendende zweite Leuchtdioden (36) aufweist.

6. Warnlichtvorrichtung nach Anspruch 5, **dadurch gekennzeichnet, dass** jede Warnleuchteneinheit (16) mit einer von der zentralen Energieversorgungseinheit (12) über den Energieversorgungsbus (14) gespeiste zweite Energieversorgungsschaltung (34) für die mindestens eine zweite Leuchtdiode (36) versehen ist.

7. Warnlichtvorrichtung nach Anspruch 5 und 6, **dadurch gekennzeichnet, dass** die bei Betrieb der ersten Leuchtdioden (32) der Warnleuchteneinheiten (16) auf dem Energieversorgungsbus (14) liegende Spannung verschieden ist von der bei Betrieb der zweiten Leuchtdioden (36) der Warnleuchteneinheiten (16) auf dem Energieversorgungsbus (14) liegende Spannung und dass dem Dekoder (48) jeder Warnleuchteneinheit (16) eine über die Spannung auf dem Energieversorgungsbus (14) gesteuerte Modusauswahlschaltung (24) vorgeschaltet ist, über die entweder die erste Energieversorgungsschaltung (28) oder die zweite Energieversorgungsschaltung (34) einer jeden Warnleuchteneinheit (16) mit Energie vom Energieversorgungsbus (14) zuführbar ist.
